# FASCICULE DE BREVET EUROPEEN

(11) **EP 3 616 169 B1**
(45) Date de publication et mention de la délivrance du brevet: **24.03.2021**
(21) Numéro de dépôt: 18721491.1
(22) Date de dépôt: 24.04.2018
(51) Int. Cl.: G07D 7/2033

(54) **PROCÉDÉ D'IDENTIFICATION D'UNE PIÈCE D'HORLOGERIE**
IDENTIFIZIERUNGSVERFAHREN EINER UHR
METHOD FOR IDENTIFYING A TIMEPIECE

(30) Priorité: 24.04.2017 EP 17167752
(43) Date de publication de la demande: 04.03.2020
(73) Titulaire: Patek Philippe SA Genève, 1204 Genève (CH)
(72) Inventeur: VANDINI, Alessandro, 1295 Tannay (CH); BERNASCONI, Laurent, 1263 Crassier (CH)
(74) Mandataire: Micheli & Cie SA
(86) Numéro de dépôt international: PCT/IB2018/052840
(87) Numéro de publication internationale: WO 2018/198025

(56) Documents cités:
- WO-A1-2017/050763
- US-A1- 2009 008 924
- US-A1- 2009 033 914
- US-A1- 2009 302 123
- US-A1- 2014 140 570

## Description

La présente invention a pour objet un procédé d'identification d'une pièce d'horlogerie.

Les questions de traçabilité et d'authentification unique d'un produit revêtent une grande importance, en particulier dans le domaine de l'horlogerie. Plusieurs solutions sont connues pour faciliter l'identification d'un produit fini, dont les plus fréquemment utilisées sont l'ajout d'un unique identifiant physique extérieur ou intérieur à l'objet (puce, code barre, étiquette RFID...) ou l'apposition d'une marque physique ou chimique unique directement sur l'objet. Les informations liées à cet identifiant unique sont ensuite stockées dans une base de données, accessible pour comparaison et authentification d'un produit par un service après-vente par exemple ou même par le consommateur final. US 2014/140570 A1 concerne un procédé d'authentification d'un objet dans lequel un code unique pour l'objet est généré à partir d'une image d'imperfections sur l'objet, telles que des rayures, et ce code est associé avec un numéro de série de l'objet dans une base de données.

Dans le domaine de l'horlogerie, la solution la plus utilisée pour la traçabilité et l'authentification d'une pièce est le marquage physique ou chimique (gravure d'un numéro d'identification unique par exemple). Ce marquage peut se faire sur un endroit non visible ou visible sur le produit fini. L'ajout d'un identifiant physique (puce, code-barres...) unique à l'extérieur de la pièce d'horlogerie n'est que peu envisageable pour des raisons esthétiques.

Cependant, la marque d'identification qui ne se voit pas sur le produit fini monté impose de le démonter au moins partiellement pour vérifier son authenticité, tandis que la marque placée sur une partie visible de l'objet doit être esthétique, non invasive et doit résister à l'usure pour éviter son effacement et garantir la bonne authentification de l'objet dans le temps.

Le but de la présente invention est de fournir un procédé d'identification d'un objet, particulièrement adapté au domaine de l'horlogerie et qui permette une traçabilité augmentée et une authentification facilitée de l'objet.

La présente invention a pour objet un procédé d'identification selon la revendication 1.

Le procédé d'identification d'une pièce d'horlogerie selon l'invention comprend les étapes suivantes.

La première étape consiste à prendre en photographie une première zone de la pièce d'horlogerie avec un grossissement suffisant pour y faire apparaître les traces ou défauts dans ou sur le substrat de la pièce d'horlogerie dus au procédé de fabrication de la pièce d'horlogerie (polissage, gravure, fraisage, tournage, émaillage, montage...) dans cette première zone. Ces traces ou défauts sont distincts, distinguables et uniques d'un objet à un autre. Ils constituent donc une empreinte d'identification unique de la pièce d'horlogerie. De préférence, la première zone de la pièce d'horlogerie est choisie pour être visible de l'extérieur de la pièce d'horlogerie et susceptible de ne subir que peu ou pas de transformations lors de l'utilisation de la pièce d'horlogerie.

Les traces ou défauts caractérisant la première zone peuvent également comprendre par exemple les rayures qui se forment sur un élément de la pièce d'horlogerie (par exemple un tenon ou un pivot d'une pièce d'horlogerie) lorsqu'un premier composant de la pièce d'horlogerie (par exemple, le mouvement) est emboité dans un second composant de la pièce d'horlogerie (par exemple, la boîte). Ces rayures peuvent être assimilées à une empreinte unique de l'élément.

La première zone peut être le pivot de l'aiguille des secondes ou le tenon de centre du mouvement d'une pièce d'horlogerie. Ces éléments présentent généralement une surface polie pour des raisons esthétiques notamment. Les traces de polissage peuvent être visibles par photographie avec un grossissement suffisant et sont distinctes, distinguables et uniques d'un pivot ou tenon à l'autre, d'une pièce d'horlogerie à l'autre. De plus, le pivot de l'aiguille des secondes ou le tenon de centre est protégé par la glace de la pièce d'horlogerie, à travers laquelle il reste néanmoins visible, et ne risque donc pas d'être abîmé ou transformé par l'utilisation ou le port de la pièce d'horlogerie. Dans l'exemple du pivot de l'aiguille des secondes, la photographie est prise de préférence le plus en aval possible du processus de fabrication, c'est-à-dire lorsque la pièce d'horlogerie est finie et assemblée et depuis l'extérieur. La photographie pourrait aussi être prise à un autre moment du processus de fabrication, par exemple avant de poser la glace.

La seconde étape du procédé consiste à transformer à l'aide d'un algorithme approprié les traces ou défauts dans ou sur la première zone repérés par photographie à l'étape précédente en un code unique pour former un identifiant unique de la pièce d'horlogerie.

Enfin, l'identifiant unique est stocké dans une base de données, pour permettre d'authentifier la pièce d'horlogerie dans le futur par comparaison du nouveau code unique obtenu par une nouvelle photographie de la première zone.

De préférence, outre le code unique caractérisant les traces et défauts du substrat de la pièce d'horlogerie dans la première zone, l'identifiant unique comprend également des informations caractéristiques de la première zone (coordonnées dans un référentiel propre à la pièce d'horlogerie, nom de la zone ou de l'élément,...) permettant de repérer cette première zone sur la pièce d'horlogerie.

On obtient ainsi un procédé d'identification permettant une authentification rapide, facile et sans démontage de la pièce d'horlogerie : il suffit en effet de prendre une nouvelle photographie de la première zone, de transformer les traces ou défauts repérés en un nouveau code à l'aide de l'algorithme approprié et de comparer ce nouveau code au code unique de l'identifiant unique de la pièce d'horlogerie stocké dans la base de données.

Le procédé selon l'invention est en outre facilement mis en œuvre, sans qu'il soit nécessaire de recourir à des moyens complexes pour la photographie de la première zone. Les données stockées pour chaque objet peuvent être de taille minimale de par leur nature (format alphanumérique par exemple pour le code unique et les informations caractéristiques de la première zone, pas besoin de stocker une image), économisant l'espace de stockage et permettant un accès plus rapide à la base de données.

Le procédé d'identification selon l'invention comprend en outre les étapes suivantes.

Une marque d'identification macroscopique est apposée sur une seconde zone de la pièce d'horlogerie. De préférence, cette seconde zone n'est pas visible de l'extérieur sans démonter la pièce d'horlogerie. Cette marque peut être par exemple une étiquette ou obtenue par une modification physique ou chimique du substrat de la pièce d'horlogerie dans ladite seconde zone, comme par gravure. La marque contient au moins une information sur la pièce d'horlogerie (numéro de série, modèle...). Dans le cas d'une pièce d'horlogerie comme une montre, cette marque peut être le numéro de série ou de modèle gravé traditionnellement à l'intérieur de la boîte de montre.

La ou les informations contenues dans la marque d'identification sont associées à l'identifiant unique de la pièce d'horlogerie (code unique et éventuellement, informations caractéristiques de la première zone) et stocké avec lui dans la base de donnée, pour permettre d'authentifier la pièce d'horlogerie dans le futur par comparaison de la marque d'identification ou du nouveau code obtenu par une nouvelle photographie de la première zone.

Ce procédé offre donc si besoin une authentification encore plus robuste et complète de la pièce d'horlogerie.

De plus, ce procédé est particulièrement adapté au domaine de l'horlogerie. En effet, une pièce d'horlogerie est très souvent composée d'au moins deux composants distincts associés ou assemblés lors du montage final, comme la boîte et le mouvement par exemple. Dans ce cas, il est possible de choisir la première zone de la pièce d'horlogerie sur le premier composant, par exemple le mouvement, et d'apposer la marque d'identification (par exemple un numéro de série gravé), sur le second composant, par exemple, la boîte. Ainsi, même si la marque d'identification est cachée dans la boîte de montre lors du montage de la pièce d'horlogerie, ladite pièce est encore facilement identifiable par sa première zone si celle-ci est visible de l'extérieur tandis que la pièce d'horlogerie peut être complètement authentifiée par un démontage.

Le procédé selon l'invention permet de s'assurer que même en cas de réparation ou d'entretien nécessitant un démontage, la pièce d'horlogerie est alors traçable dans sa totalité via chacun de ses composants. De plus, le suivi et l'identification de la pièce d'horlogerie sont encore possibles même si la première zone vient à être détériorée (réparation, usure...). Dans ce cas, il est possible de définir une nouvelle première zone caractérisée par des nouvelles informations caractéristiques pour obtenir un nouveau code unique à associer avec les informations contenues dans la marque d'identification apposée dans la seconde zone, pour obtenir un nouvel identifiant unique et complet de la pièce d'horlogerie.

## Revendications

1. Procédé d'identification d'une pièce d'horlogerie comprenant un premier composant et un second composant, ledit procédé comprenant les étapes suivantes:
• Prendre en photographie une première zone choisie sur le premier composant de la pièce d'horlogerie avec un grossissement suffisant pour faire apparaître les traces ou défauts dans ou sur le substrat de la pièce d'horlogerie dans cette première zone dus au procédé de fabrication de la pièce d'horlogerie, lesdits traces ou défauts dans ou sur la première zone comprenant des rayures produites lorsque le second composant est emboité dans le premier composant;
• Transformer à l'aide d'un algorithme approprié les traces ou défauts de la première zone repérés par photographie en un code unique pour former un identifiant unique de la pièce d'horlogerie ;
• Stocker l'identifiant unique de la pièce d'horlogerie dans une base de données pour permettre d'authentifier la pièce d'horlogerie dans le futur par comparaison avec un nouveau code unique obtenu après transformation par l'algorithme des traces ou défauts repérés par une nouvelle photographie de ladite première zone ;
• Apposer une marque d'identification sur une seconde zone choisie sur le second composant de la pièce d'horlogerie, ladite marque contenant au moins une information caractérisant la pièce d'horlogerie;
• Associer ladite au moins une information contenue dans la marque d'identification à l'identifiant unique de la pièce d'horlogerie et la stocker avec ledit identifiant unique dans la base de données pour permettre d'authentifier la pièce d'horlogerie dans le futur par comparaison de la marque d'identification et/ou d'un nouveau code unique obtenu après transformation par l'algorithme des traces ou défauts repérés par une nouvelle photographie de ladite première zone.

2. Procédé d'identification d'une pièce d'horlogerie selon la revendication 1, dans lequel l'identifiant unique comprend en outre des informations caractéristiques de la première zone permettant son repérage sur la pièce d'horlogerie.

3. Procédé d'identification d'une pièce d'horlogerie selon l'une des revendications précédentes, dans lequel la première zone est choisie sur une partie visible de l'extérieur de la pièce d'horlogerie.

4. Procédé selon l'une des revendications précédente, **caractérisé par le fait que** la marque d'identification est obtenue par modification chimique ou physique du substrat du second composant de la pièce d'horlogerie dans la seconde zone.

5. Procédé selon l'une des revendications précédentes, **caractérisé par le fait que** la marque d'identification n'est pas visible de l'extérieur de la pièce d'horlogerie sans la démonter.

6. Procédé selon l'une des revendications précédentes, **caractérisé par le fait que** le premier composant est formé par le mouvement de la pièce d'horlogerie et le second composant par la boîte de la pièce d'horlogerie destiné à recevoir ledit mouvement.

7. Procédé selon la revendication précédente 6, **caractérisé par le fait que** la première zone est le pivot de l'aiguille des secondes ou le tenon de centre du mouvement de la pièce d'horlogerie.

## Patentansprüche

1. Verfahren zur Identifizierung einer Uhr, die ein erstes Bauteil und ein zweites Bauteil umfasst, wobei das Verfahren die folgenden Schritte umfasst:
• Fotografieren einer ersten gewählten Zone auf dem ersten Bauteil der Uhr mit einer Vergrößerung, die ausreicht, um Spuren oder Unvollkommenheiten in oder auf dem Substrat der Uhr in dieser ersten Zone aufgrund des Herstellungsverfahrens der Uhr zutage zu bringen, wobei die Spuren oder Unvollkommenheiten in oder auf der ersten Zone Kratzer umfassen, die erzeugt werden, wenn das zweite Bauteil in das erste Bauteil eingeschalt wird;
• mittels eines geeigneten Algorithmus, Umwandeln der Spuren oder Unvollkommenheiten der ersten Zone, die durch die Fotografie ausfindig gemacht wurden, in einen eindeutigen Code zum Bilden einer eindeutigen Kennung der Uhr;
• Speichern der eindeutigen Kennung der Uhr in einer Datenbank, um das Authentifizieren der Uhr in der Zukunft durch Vergleichen mit einem neuen eindeutigen Code zu ermöglichen, der nach der Umwandlung der durch eine neue Fotografie der ersten Zone ausfindig gemachten Spuren oder Unvollkommenheiten durch den Algorithmus erhalten wird;
• Aufdrücken einer Identifizierungsmarke auf einer gewählten zweiten Zone auf dem zweiten Bauteil der Uhr, wobei die Marke mindestens eine Information enthält, die die Uhr kennzeichnet;
• Verknüpfen der mindestens einen in der Identifizierungsmarke enthaltenen Information mit der eindeutigen Kennung der Uhr und deren Speichern mit der eindeutigen Kennung in der Datenbank, um das Authentifizieren der Uhr in der Zukunft durch Vergleich der Identifizierungsmarke und/oder eines neuen eindeutigen Codes zu ermöglichen, der nach der Umwandlung der durch eine neue Fotografie der ersten Zone ausfindig gemachten Spuren oder Unvollkommenheiten durch den Algorithmus erhalten wird.

2. Verfahren zum Identifizieren einer Uhr nach Anspruch 1, wobei die eindeutige Kennung ferner für die erste Zone charakteristische Informationen umfasst, die ihr Ausfindigmachen auf der Uhr ermöglichen.

3. Verfahren zum Identifizieren einer Uhr nach einem der vorhergehenden Ansprüche, wobei die erste Zone auf einem von außen sichtbaren Teil der Uhr gewählt wird.

4. Verfahren nach einem der vorhergehenden Ansprüche, **dadurch gekennzeichnet, dass** die Identifizierungsmarke durch chemische oder physikalische Veränderung des Substrats des zweiten Bauteils der Uhr in der zweiten Zone erhalten wird.

5. Verfahren nach einem der vorhergehenden Ansprüche, **dadurch gekennzeichnet, dass** die Identifizierungsmarke nicht von außerhalb der Uhr sichtbar ist, ohne sie auseinanderzunehmen.

6. Verfahren nach einem der vorhergehenden Ansprüche, **dadurch gekennzeichnet, dass** das erste Bauteil aus dem Uhrwerk der Uhr und das zweite Bauteil aus dem Gehäuse der Uhr besteht, das dazu bestimmt ist, das Uhrwerk aufzunehmen.

7. Verfahren nach dem vorhergehenden Anspruch 6, **dadurch gekennzeichnet, dass** die erste Zone der Drehzapfen des Sekundenzeigers oder der Mittelstift des Uhrwerks der Uhr ist.

## Claims

1. Method for identifying a timepiece comprising a first component and a second component, said method comprising the following steps:
• photographing a first zone chosen on the first component of the timepiece with sufficient enlargement to show the tracks or flaws in or on the substrate of the timepiece in this first zone resulting from the process of manufacturing the timepiece, said tracks or flaws in or on the first zone comprising scratches produced when the second component is fitted into the first component;
• using an appropriate algorithm to convert the tracks or flaws of the first zone which are picked out by photography into a unique code to form a unique identifier of the timepiece;
• storing the unique identifier of the timepiece in a database to permit authentication of the timepiece in the future by comparison with a new unique code obtained after conversion by the algorithm of the tracks or flaws picked out by a new photograph of said first zone;
• applying an identification mark to a second zone chosen on the second component of the timepiece, said mark containing at least one item of information characterising the timepiece;
• associating said at least one item of information contained in the identification mark with the unique identifier of the timepiece and storing it with said unique identifier in the database to permit authentication of the timepiece in the future by comparison of the identification mark and/or a new unique code obtained after conversion by the algorithm of the tracks or flaws picked out by a new photograph of said first zone;

2. Method for identifying a timepiece as claimed in claim 1, wherein the unique identifier further comprises information characteristic of the first zone permitting its location on the timepiece.

3. Method for identifying a timepiece as claimed in any one of the preceding claims, wherein the first zone is chosen on a visible part of the outside of the timepiece.

4. Method as claimed in any one of the preceding claims, **characterised in that** the identification mark is obtained by chemical or physical modification of the substrate of the second component of the timepiece in the second zone.

5. Method as claimed in any one of the preceding claims, **characterised in that** the identification mark is not visible from the outside of the timepiece without disassembling it.

6. Method as claimed in any one of the preceding claims, **characterised in that** the first component is formed by the movement of the timepiece and the second component is formed by the case of the timepiece which is intended to receive said movement.

7. Method as claimed in the preceding claim 6, **characterised in that** the first zone is the pivot of the seconds hand or the centre post of the movement of the timepiece.
